# FASCICULE DE BREVET EUROPEEN

(11) **EP 0 905 595 B1**
(45) Date de publication et mention de la délivrance du brevet: **08.05.2002**
(21) Numéro de dépôt: 98402115.4
(22) Date de dépôt: 26.08.1998
(51) Int. Cl.: G05D 3/10, G05B 19/40, E05B 65/36

(54) **Systeme d'Asservissement d'actionneurs rotatifs pour une pluralite d'organes pilotes par un boitier central**
System zur Servosteuerung von Drehbetätigern für eine Vielzahl von zentral gesteuerten Einzelteilen
System for servoing rotating actuators for a plurality of parts driven by a central box

(30) Priorité: 26.09.1997 FR 9711998
(43) Date de publication de la demande: 31.03.1999
(73) Titulaire: VALEO SECURITE HABITACLE, 94000 Créteil (FR)
(72) Inventeur: Portet, Vincent, 80132 Yonval (FR)
(74) Mandataire: Peuscet, Jacques

(56) Documents cités:
- EP-A- 0 204 069
- EP-A- 0 414 941
- DE-A- 3 922 098
- DE-A- 3 933 432
- FR-A- 2 735 882
- US-A- 4 130 787
- US-A- 4 698 560

## Description

La présente invention concerne un système d'asservissement d'actionneurs rotatifs pour une pluralité d'organes pilotés par un boîtier central de commande, notamment pour des serrures électriques de véhicule automobile à condamnation centralisée.

Dans certains véhicules automobiles équipés de serrures électriques multi-fonctions, telles que la condamnation simple, la supercondamnation, la condamnation enfant, les différents états possibles de chaque serrure sont obtenus au moyen d'un mécanisme actionné par un actionneur rotatif qui possède un nombre de positions d'arrêt correspondant au nombre de fonctions à réaliser. Les différents actionneurs sont tous pilotés par un boîtier central qui commande le déclenchement et l'interruption de l'alimentation de l'ensemble des actionneurs pour atteindre les différentes positions d'arrêt précitées. Un tel système fonctionne relativement bien lorsque la vitesse de fonctionnement des actionneurs est réduite, car l'erreur de positionnement des actionneurs, due à leur course résiduelle, après interruption de l'alimentation, reste faible. En revanche, lorsque l'on souhaite accomplir rapidement les différentes fonctions des serrures, la vitesse de fonctionnement des actionneurs et donc, leurs erreurs de positionnement dues à l'inertie, augmentent en conséquence, d'autant plus que la course résiduelle de chaque actionneur varie en fonction de l'inertie propre à chaque actionneur et de la vitesse atteinte par chaque actionneur pour actionner le mécanisme correspondant, ces paramètres variant d'un actionneur à l'autre.

On a alors proposé, pour positionner précisément les actionneurs, de freiner les actionneurs dès qu'ils atteignent leur position d'arrêt désirée. A cet effet, on a prévu différents types de commutateurs à pistes et frotteurs, rotatifs ou linéaires, ou des jeux de contacteurs actionnés par des cames, pour détecter le moment où l'actionneur atteint la position désirée, par exemple en mesurant l'angle de rotation du rotor d'un moteur électrique (voir EP 0 204 069). Toutefois, de tels systèmes sont généralement complexes et très coûteux car il est nécessaire de prévoir des commutateurs pour chaque position d'arrêt de chaque actionneur et des dispositifs de freinage, par exemple par mise en. court-circuit d'un rotor de moteur rotatif, pour chaque actionneur.

Par ailleurs, le document DE 3 922 098 décrit un système d'asservissement d'actionneurs rotatifs pour une pluralité d'organes d'une installation de verrouillage de portes de véhicule, dans lequel un actionneur rotatif est destiné à actionner chaque organe et comporte plusieurs positions d'arrêt correspondant à différents états possibles de l'organe associé, chaque actionneur étant asservi en position par un contacteur qui est adapté pour alimenter en courant ledit actionneur jusqu'à ce que la position désirée de ce dernier soit atteinte. Des commutateurs, actionnables manuellement et également couplés mécaniquement aux actionneurs rotatifs, servent à piloter respectivement lesdits actionneurs rotatifs.

Une autre solution consisterait à supprimer les détecteurs de position en les remplaçant par une temporisation déterminée pour alimenter l'actionneur juste le temps nécessaire à l'actionneur pour atteindre sa position d'arrêt souhaitée ; mais cette solution ne donne pas satisfaction, car la vitesse des différents actionneurs n'est pas constante et dépend, d'une part, de l'inertie propre à chaque actionneur et à chaque organe à actionner et, d'autre part, de la résistance opposée par l'organe à actionner.

L'invention a donc pour but d'éliminer les inconvénients précités et de proposer un système d'asservissement d'actionneurs rotatifs pour une pluralité d'organes pilotés par un même boîtier central, qui soit simple, peu coûteux, présente un nombre de fils électriques de liaison relativement réduit et permette de positionner précisément les différents organes dans un même état, même lorsque ces organes doivent être actionnés rapidement.

A cet effet, l'invention a pour objet un système d'asservissement d'actionneurs rotatifs pour une pluralité d'organes pilotés par un même boîtier central, dans lequel un actionneur rotatif est destiné à actionner chaque organe et comporte plusieurs positions d'arrêt correspondant à différents états possibles de l'organe associé, chaque actionneur étant asservi en position par un contacteur qui est adapté pour alimenter en courant ledit actionneur jusqu'à ce que la position désirée de ce dernier soit atteinte, caractérisé par le fait que chaque contacteur est relié au boîtier central par un nombre de premières lignes d'alimentation en courant, communes à tous les actionneurs, correspondant au nombre de positions d'arrêt de chaque actionneur, le boîtier central commandant celle des premières lignes d'alimentation à alimenter en fonction de l'état désiré commun desdits organes, chaque actionneur étant, en outre, relié au boîtier central, en premier lieu, par une deuxième ligne d'alimentation commune à tous les actionneurs, en deuxième lieu, par une ligne de retour d'informations, propre à chaque actionneur, pour informer le boîtier central de l'alimentation ou non dudit actionneur, et en troisième lieu, par une ligne de commande de freinage, propre à chaque actionneur, pour freiner ledit actionneur dès que le boîtier central est informé par la ligne de retour d'informations de l'arrêt et/ou de l'absence de l'alimentation dudit actionneur.

Avantageusement, chaque actionneur est un moteur électrique rotatif à rotor bobiné et la ligne de commande de freinage associée est apte à mettre en court-circuit le rotor dudit moteur. De préférence, la commande de freinage est reliée, d'une part, à une borne du moteur associé dont l'autre borne est à la masse et, d'autre part, à une sortie du boîtier central qui est agencée pour être à la masse lorsque la commande de freinage est active et à haute impédance lorsque la commande de freinage est inactive. La sortie précitée du boîtier central peut également être équipée d'un dispositif d'auto-limitation de courant, dont la valeur du courant limite est supérieure au courant consommé par le moteur bloqué.

Selon une autre caractéristique, chaque ligne de retour d'informations est avantageusement reliée à un détecteur de tension, monté en parallèle entre l'actionneur et le contacteur, pour envoyer au boîtier central une simple donnée binaire d'alimentation ou de non-alimentation dudit actionneur.

Selon encore une autre caractéristique, le boîtier central est agencé pour couper l'alimentation commune des contacteurs dès que le boîtier central est informé, par les différentes lignes de retour d'informations, que plus aucun actionneur n'est alimenté. Dans ce cas, le boîtier central comporte avantageusement une temporisation pour couper l'alimentation commune des contacteurs à l'expiration d'un délai de consigne de la temporisation, même si le boîtier central est informé par les lignes de retour d'informations, qu'encore au moins un actionneur est alimenté.

Dans un mode de réalisation particulier, chaque contacteur est constitué, d'une part, d'une pluralité de pistes reliées chacune à une première ligne d'alimentation respective, lesdites pistes étant agencées concentriquement par rapport à un axe central et s'étendant sur des secteurs angulaires différents; et d'autre part, d'un frotteur rotatif s'étendant radialement à partir dudit axe central pour venir en contact frottant avec lesdites pistes, l'actionneur associé, qui est alimenté en courant par l'intermédiaire du frotteur, étant agencé pour simultanément actionner l'organe associé et entraîner en rotation autour dudit axe central le frotteur jusqu'à ce que celui-ci sorte du secteur angulaire de la piste qui est effectivement alimentée, la fin de course du frotteur sur une piste donnée définissant ainsi la position d'arrêt correspondante de l'actionneur.

L'invention vise également un tel système pour des organes constitués par des serrures électriques de véhicule automobile.

Pour mieux faire comprendre l'objet de l'invention, on va décrire maintenant, à titre d'exemple, un mode de réalisation représenté sur le dessin annexé.

Sur ce dessin
- la figure 1 est un schéma synoptique fonctionnel du système de l'invention pour une pluralité de serrures électriques ;
- la figure 2 est une vue schématique d'un mode de réalisation particulier du système d'asservissement associé à une serrure donnée ;
- la figure 3 représente un schéma électrique d'un dispositif d'auto-limitation de courant pour la commande de freinage de l'actionneur de la figure 2.

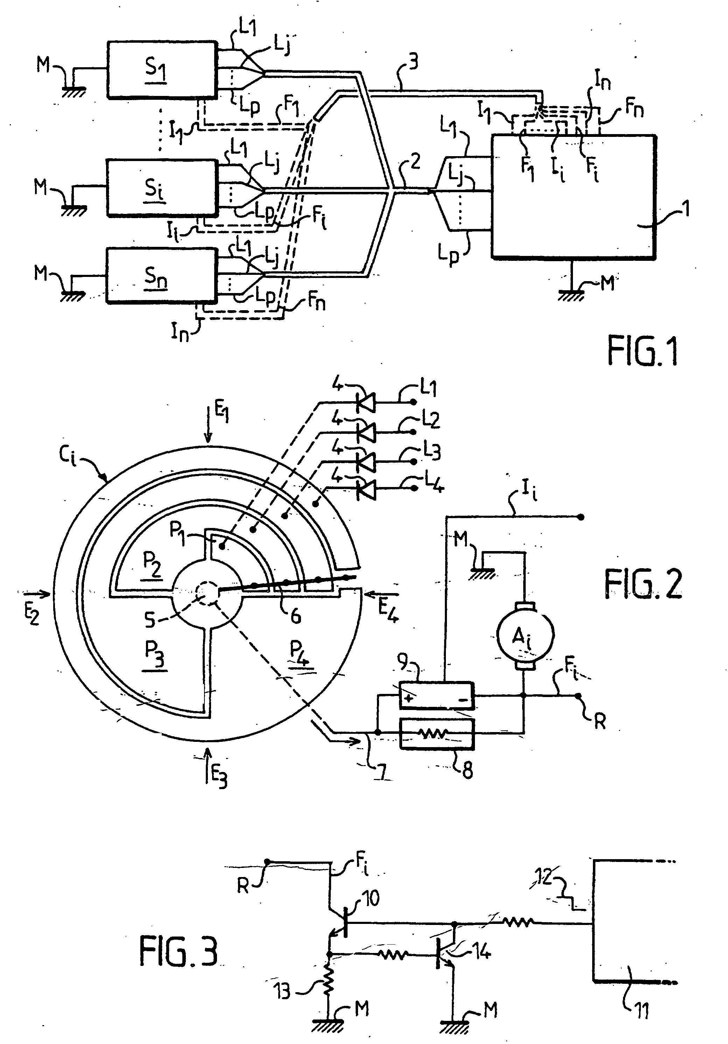

Selon l'exemple particulier de réalisation représenté sur le dessin, le système de l'invention comporte un boîtier central de commande à condamnation centralisée 1 et une pluralité de serrures Sᵢ, avec i étant un nombre entier compris entre 1 et n, comme illusté sur la figure 1. Dans ce cas de figure, on suppose que l'actionneur Aᵢ associé à chaque serrure Sᵢ est intégré à celle-ci. Dans le cas contraire où l'actionneur serait séparé de la serrure associée, le boîtier central 1 serait relié directement aux actionneurs Aᵢ au lieu des serrures Sᵢ.

Chaque serrure Sᵢ est reliée au boîtier central 1 par un premier connecteur 2 constitué d'une pluralité de premières lignes d'alimentation Lⱼ, avec j étant un nombre entier compris entre 1 et p, ces premières lignes d'alimentation étant communes à toutes les serrures S₁ à Sₙ. Le nombre p de premières lignes d'alimentation correspond au nombre d'états possibles pour chaque serrure. Le boîtier central 1 est agencé pour sélectivement alimenter simultanément l'ensemble des serrures par l'intermédiaire d'une première ligne d'alimentation pré-déterminée parmi l'ensemble desdites premières lignes d'alimentation.

Le boîtier central 1 est relié, en outre, à chaque serrure Sᵢ par une deuxième ligne d'alimentation, commune à toutes les serrures, et constituée ici par la masse M. Cette deuxième ligne d'alimentation pourrait être utilisée si les serrures devaient fonctionner avec un moteur à courant alternatif.

Le boîtier central 1 est, en outre, relié à chaque serrure Si par un deuxième connecteur 3 qui comporte une ligne de retour d'informations Iᵢ propre à chaque serrure Sᵢ et une ligne de commande de freinage Fᵢ propre à chaque serrure Sᵢ, à savoir au total n lignes de retour d'informations I₁ à Iₙ et n lignes de commande de freinage F₁ à Fₙ. On voit ainsi qu'on obtient une connection entre le boîtier central et les différentes serrures avec un nombre de fils électriques relativement réduit.

On va maintenant se référer plus particulièrement à la figure 2 qui montre de manière schématique la structure interne du système d'asservissement en position d'un actionneur Aᵢ associé à une serrure Sᵢ. Sur cette figure, on a choisi, à titre d'exemple, p = 4, ce qui correspond à quatre états possibles pour la serrure Sᵢ. Le boîtier central 1 (non représenté sur cette figure) est relié à un contacteur Cᵢ par quatre premières lignes d'alimentation L₁ à L₄, communes également à toutes les autres serrures. Ces premières lignes d'alimentation sont respectivement munies de diodes 4 interdisant le retour du courant vers le boîtier central 1 pour éviter que plusieurs actionneurs en parallèle ne s'alimentent mutuellement de façon intempestive par des voies non prévues à cet effet.

Chacune des premières lignes L₁ à L₄ est respectivement connectée à une piste P₁ à P₄ du contacteur Cᵢ. Les pistes P₁ à P₄ sont agencées dans un même plan et concentriquement emboîtées les unes dans les autres par rapport à un axe central 5. La première piste P₁ qui est radialement la plus proche de l'axe central 5 s'étend, à partir d'une position angulaire égale à 0° et correspondant à une position d'arrêt de l'actionneur dite quatrième position E₄, sur un secteur angulaire de forme généralement annulaire jusqu'à une position angulaire égale à 90° qui correspond à une autre position d'arrêt de l'actionneur dite première position d'arrêt E₁. La seconde piste P₂ s'étend à partir de la quatrième position d'arrêt précitée E₄ sur un secteur angulaire jusqu'à une position angulaire égale à 180° correspondant à la deuxième position d'arrêt E₂ de l'actionneur. Cette deuxième piste P₂ est constituée d'une première portion annulaire radialement circonscrite à la première piste P₁ et se prolongeant par une deuxième portion annulaire s'étendant sur toute l'extension radiale des deux premières pistes. De manière analogue, la troisième piste P₃ s'étend à partir de la quatrième position d'arrêt précitée E₄ sur un secteur angulaire jusqu'à une position angulaire égale à 270°, correspondant à la troisième position d'arrêt E₃ de l'actionneur. Ces quatre positions d'arrêt sont indiquées symboliquement sur la figure 2 par des flèches respectives E₁ à E₄. La troisième piste P₃ est constituée d'une première portion annulaire circonscrite à la deuxième piste P₂ et se prolongeant par une deuxième portion annulaire dont l'extension radiale correspond à l'ensemble des pistes P₁ à P₃. Enfin, la quatrième piste P₄ s'étend à partir d'une position légèrement espacée angulairement de la quatrième position E₄ précitée sur un secteur angulaire d'environ 360° jusqu'à ladite quatrième position d'arrêt E₄. Cette quatrième piste P₄ est également constituée d'une première portion annulaire circonscrite à la troisième piste P₃ et se prolongeant par une deuxième portion annulaire dont l'extension radiale correspond à l'ensemble des quatre pistes.

Le contacteur Cᵢ comporte en outre un frotteur simple rotatif 6 qui s'étend radialement à partir de l'axe central précité 5. Le frotteur 6 est connecté par une liaison électrique 7 à la borne positive du moteur Aᵢ dont la borne négative est reliée à la masse M. Lorsque le moteur Aᵢ est alimenté en courant, il actionne le mécanisme de la serrure associée Sᵢ et, simultanément, entraîne en rotation l'axe 5 qui entraîne, à son tour, le frotteur 6 qui s'étend sur toute l'extension radiale des pistes P₁ à P₄. On notera que toutes les pistes P₁ à P₄ sont à la fois radialement et angulairement espacées les unes des autres.

Un élément résistif 8, pouvant être non linéaire, est monté en série sur la liaison électrique 7 entre le frotteur 6 et le moteur Aᵢ, et un détecteur de tension 9 est monté en parallèle à la liaison électrique 7 pour détecter la tension aux bornes de l'élément résistif 8 et envoyer sur la ligne de retour d'informations Iᵢ l'information "alimentation/non-alimentation" du moteur Aᵢ, sous la forme d'une simple donnée binaire. On a ainsi réalisé un détecteur de courant 8, 9 monté en série entre l'actionneur ou moteur Aᵢ et le contacteur Cᵢ. Cette information permettra ainsi au boîtier central 1 de savoir si l'actionneur Aᵢ a été alimenté, s'il est en cours d'alimentation et si cette alimentation a été coupée, et donc de déterminer si l'actionneur a atteint la position désirée E₁ à E₄. On notera que le contacteur utilisé ici ne permet pas de retour en arrière du frotteur 6, par exemple de la position E₂ à la position E₁, de sorte que, pour atteindre une position donnée Eᵢ, il sera nécessaire d'alimenter d'abord le contacteur sur la ligne L₄, pour amener l'actionneur en position E₄, et en quelque sorte ré-initialiser le contacteur, puis d'alimenter le contacteur sur la ligne correspondant effectivement à la position choisie. Bien entendu, l'invention n'est pas limitée à ce type de contacteur, et on pourrait prévoir un commutateur à frotteur et à pistes permettant un tel retour en arrière.

En se référant toujours à la figure 2, on voit que la ligne de commande de freinage Fᵢ est connectée, d'une part, à la borne positive du moteur Aᵢ et d'autre part, à une sortie R du boîtier central.

Les positions d'arrêt E₁ à E₄ peuvent correspondre par exemple à une décondamnation totale de toutes les serrures, à une condamnation extérieure des serrures, à une condamnation intérieure des serrures et à une super-condamnation, à savoir une condamnation totale.

On va maintenant se référer à la figure 3 qui représente, à titre d'exemple, un circuit électronique incorporé au boîtier central 1 et situé en amont de la sortie R. Cette sortie R est connectée au collecteur d'un transistor 10 qui est non-passant lorsque la commande de freinage est inactive. La base de ce transistor 10 est connectée à un micro-contrôleur 11 du boîtier 1 qui est destiné à envoyer un signal sous forme de créneau 12 vers le transistor 10 pour le rendre passant lorsque la commande de freinage est active, c'est-à-dire lorsque le boîtier central est informé par la ligne de retour d'informations Iᵢ que le moteur Aᵢ n'est plus alimenté. La ligne de commande de freinage Fᵢ est, en outre, équipée d'un dispositif auto-limitatif de courant pour éviter tout court-circuit franc en cas de fonctionnement anormal du système, par exemple, pour éviter une commande de freinage alors que le moteur est encore alimenté, ce qui impliquerait une destruction du boîtier central et/ou du contacteur. A cet effet, l'émetteur du transistor 10 est relié, d'une part, à la masse M par l'intermédiaire d'une faible résistance 13, et d'autre part, à la base d'un autre transistor 14 dont le collecteur est relié au micro-contrôleur 11 en amont du transistor 10 et l'émetteur est relié à la masse M. Ainsi, si le transistor 10 devient passant à la suite d'une commande de freinage 12 par le micro-contrôleur 11 et que le courant provenant du moteur Aᵢ et allant à la masse M est trop grand, par exemple supérieur à une valeur de courant limite égale au rapport de 0,6 V sur la valeur de la résistance faible 13, le transistor 14 devient, à son tour, passant, ce qui provoque la mise à la masse M du transistor 10 qui se bloque à nouveau. Bien entendu, la valeur de courant limite ne devrait pas être inférieure à celle du courant consommé par le moteur bloqué, de façon à préserver la qualité de freinage propre au rotor bobiné du moteur. Bien entendu, tout autre dispositif auto-limitatif de courant pourrait être utilisé en variante.

On va maintenant brièvement décrire le fonctionnement du système de l'invention en référence aux figures 1 à 3.

Lorsque le boîtier central 1 reçoit un signal de commande ou de télécommande pour faire passer l'ensemble des serrures dans un état donné, par exemple, dans un état de condamnation extérieure correspondant à la position d'arrêt E₂ des actionneurs, le boîtier central 1 commande l'alimentation par la batterie du véhicule, tout d'abord, de la première ligne d'alimentation L₄, qui alimente en courant tous les contacteurs C₁ à Cₙ, avec n étant le nombre de serrures du véhicule, car les premières lignes d'alimentation sont communes à toutes les serrures. Chaque contacteur Cᵢ reçoit alors l'alimentation en courant sur sa piste respective P₄. Deux cas de figure peuvent alors se présenter
a) Si le frotteur 6 est déjà dans la position E₄, comme représenté sur la figure 2, le courant ne pourra pas alors être transmis au frotteur 6 car l'extrémité de celui-ci se trouve dans l'espace angulaire intercalaire entre les extrémités du secteur. angulaire définissant la piste P₄. Dès lors, le boîtier central 1 sera informé par le détecteur de tension 9 et la ligne de retour d'informations Iᵢ de l'absence d'alimentation du moteur associé. Deux cas peuvent alors se présenter également :
   - soit le boîtier central 1 est agencé pour reconnaître l'absence totale d'alimentation de l'actionneur et alors, il n'est pas nécessaire de déclencher une commande de freinage de ce dernier ;
   - soit le boîtier central 1 ne distingue pas l'absence et l'arrêt d'alimentation de l'actionneur, et il déclenche alors, quel que soit le cas, la commande de freinage, bien que celle-ci soit sans effet dans le cas présent.
b) Si le frotteur 6 est, par exemple, dans la position E₃, le frotteur 6 est en contact avec la piste P₄ et le courant sera alors transmis par la liaison électrique 7 au moteur Aᵢ, étant donné que la sortie R du boîtier central 1 sera bloquée par le transistor 10 ; le moteur étant alimenté en courant, il actionnera le mécanisme correspondant de la serrure et entraînera simultanément le frotteur 6 ; pendant la rotation du frotteur 6, le boîtier central 1 sera informé de l'alimentation du moteur par la ligne de retour d'informations Iᵢ ; une fois que le frotteur 6 aura atteint la position E₄, le frotteur 6, et donc le moteur associé, ne sera plus alimenté ; le boîtier central 1 en sera informé par la ligne de retour d'informations et déclenchera, par l'intermédiaire du micro-contrôleur 11, une commande de freinage 12 sur la ligne de commande de freinage Fᵢ pour rendre passant le transistor 10, ce qui aura pour effet de mettre à la masse M la borne positive du moteur et donc, de mettre en court-circuit le rotor bobiné, provoquant automatiquement son auto-freinage. Ainsi, l'actionneur et le frotteur seront immédiatement et précisément arrêtés dans la position voulue E₄.

Toutefois, si à l'expiration d'un délai de consigne de la temporisation du boîtier central 1, ce dernier est informé par les lignes de retour d'informations qu'il reste encore au moins un actionneur qui n'est pas encore dans sa position E₄, le boîtier central 1 coupera l'alimentation sur la première ligne d'alimentation L₄ et pourra, par exemple, émettre un message d'erreur ou de panne dans le véhicule ou sur la télécommande.

Si, au contraire, avant l'expiration de ce délai de consigne, le boîtier central 1 est informé par les lignes de retour d'informations que l'ensemble des actionneurs sont dans la position E₄, il pourra alors commander l'alimentation de la première ligne de commande L₂ pour amener l'ensemble des serrures dans l'état désiré E₂. Etant donné que toutes les serrures seront dans la même position initiale E₄ dans laquelle le frotteur 6 est en contact avec la piste P₂, les actionneurs pourront amener directement l'ensemble des serrures dans la position voulue.

Dans ce type de contacteur ne permettant pas de retour en arrière, il est nécessaire de prévoir une ré-initialisation dans la position E₄ de l'ensemble des actionneurs, avant d'effectuer la commande associée à la position désirée. En effet, si le frotteur d'un contacteur se trouve dans la position E₃, l'alimentation directe sur la première ligne d'alimentation L₂ sera sans effet car la piste P₂ ne sera pas en contact avec le frotteur.

L'invention est particulièrement avantageuse en ce qu'elle ne nécessite pas de détecter l'angle de rotation ou le positionnement de l'actionneur car son positionnement correct se fera automatiquement lors de la coupure de l'alimentation du moteur par le contacteur. Seul le retour d'informations sur l'alimentation ou non de l'actionneur sera nécessaire pour que le boîtier central 1 puisse positionner correctement l'actionneur, même dans le cas où des vitesses élevées sont utilisées.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications suivantes.

## Revendications

1. Système d'asservissement d'actionneurs rotatifs (Aᵢ) pour une pluralité (n) d'organes (Sᵢ) pilotés par un même boîtier central (1), dans lequel un actionneur rotatif (Aᵢ) est destiné à actionner chaque organe (Si) et comporte plusieurs positions d'arrêt (Eⱼ) correspondant à différents états possibles de l'organe associé, chaque actionneur (Aᵢ) étant asservi en position par un contacteur (Cᵢ) qui est adapté pour alimenter en courant ledit actionneur jusqu'à ce que la position désirée de ce dernier soit atteinte, **caractérisé par le fait que** chaque contacteur (Cᵢ) est relié au boîtier central (1) par un nombre (p) de premières lignes d'alimentation (Lⱼ) en courant, communes à tous les actionneurs, correspondant au nombre (p) de positions d'arrêt de chaque actionneur, le boîtier central (1) commandant celles des premières lignes d'alimentation (Lⱼ) à alimenter en fonction de l'état désiré commun desdits organes (Sᵢ), chaque actionneur (Aᵢ) étant, en outre, relié au boîtier central (1), en premier lieu, par une deuxième ligne d'alimentation (M) commune à tous les actionneurs, en deuxième lieu, par une ligne de retour d'informations (Iᵢ), propre à chaque actionneur (Aᵢ), pour informer le boîtier central (1) de l'alimentation ou non dudit actionneur (Aᵢ), et, en troisième lieu, par une ligne de commande de freinage (Fᵢ), propre à chaque actionneur (Aᵢ), pour freiner ledit actionneur (Aᵢ), dès que le boîtier central (1) est informé par la ligne de retour d'informations (Iᵢ) de l'arrêt et/ou de l'absence de l'alimentation dudit actionneur (Aᵢ).

2. Système selon la revendication 1, **caractérisé par le fait que** chaque actionneur (Aᵢ) est un moteur électrique rotatif à rotor bobiné et la ligne de commande de freinage associée (Fᵢ) est apte à mettre en court-circuit le rotor dudit moteur.

3. Système selon la revendication 2, **caractérisé par le fait que** la deuxième ligne d'alimentation est à la masse (M) et chaque ligne de commande de freinage (Fᵢ) est reliée, d'une part, à une borne du moteur associé (Aᵢ) dont l'autre borne est à la masse (M) et, d'autre part, à une sortie (R) du boîtier central (1), qui est agencée pour être à la masse lorsque la commande de freinage (12) est active et à haute impédance lorsque la commande de freinage est inactive.

4. Système selon la revendication 3, **caractérisé par le fait que** la sortie précitée (R) du boîtier central (1) est équipée d'un dispositif d'auto-limitation de courant (13, 14), dont la valeur du courant limite est supérieure au courant consommé par le moteur bloqué.

5. Système selon l'une des revendications précédentes, **caractérisé par le fait que** chaque ligne de retour d'informations (Iᵢ) est reliée à un détecteur de courant (8, 9), monté en série entre l'actionneur (Aᵢ) et le contacteur (Cᵢ), pour envoyer au boîtier central (1) une simple donnée binaire d'alimentation ou de non-alimentation dudit actionneur.

6. Système selon l'une des revendications précédentes, **caractérisé par le fait que** le boîtier central (1) est agencé pour couper l'alimentation commune des contacteurs (Cᵢ) dès que le boîtier central est informé, par les différentes lignes de retour d'informations (Iᵢ), que plus aucun actionneur n'est alimenté.

7. Système selon la revendication 6, **caractérisé par le fait que** le boîtier central (1) comporte une temporisation pour couper l'alimentation commune des contacteurs (Cᵢ) à l'expiration d'un délai de consigne de la temporisation, même si le boîtier central est informé par les lignes de retour d'informations, qu'encore au moins un actionneur est alimenté.

8. Système selon l'une des revendications précédentes, **caractérisé par le fait que** chaque contacteur (Cᵢ) est constitué, d'une part, par une pluralité de pistes (Pⱼ) reliées chacune à une première ligne d'alimentation respective (Lⱼ), lesdites pistes étant agencées concentriquement par rapport à un axe central (5) et s'étendant sur des secteurs angulaires différents, et d'autre part, par un frotteur rotatif (6) s'étendant radialement à partir dudit axe central (5) pour venir en contact frottant avec lesdites pistes, l'actionneur associé (Aᵢ), qui est alimenté en courant par l'intermédiaire du frotteur (6), étant agencé pour simultanément actionner l'organe associé (Sᵢ) et entraîner en rotation autour dudit axe central (5) le frotteur (6) jusqu'à ce que celui-ci sorte du secteur angulaire de la piste (Pⱼ) qui est effectivement alimentée, la fin de course du frotteur sur une piste donnée (Pⱼ) définissant ainsi la position d'arrêt correspondante (Eⱼ) de l'actionneur.

9. Système selon l'une des revendications précédentes, **caractérisé par le fait que** les organes sont constitués par des serrures électriques (Sᵢ) de véhicule automobile.

## Patentansprüche

1. System zur Servosteuerung von Drehbetätigern (Aᵢ) für eine Mehrzahl (n) von durch ein und dieselbe Zentralsteuerung (1) gesteuerten Organen (Sᵢ), bei dem ein Drehbetätiger (Aᵢ) dazu bestimmt ist, jedes Organ (Sᵢ) zu betätigen, und mehrere Abschaltpositionen (Eⱼ) umfaßt, die verschiedenen möglichen Zuständen des zugehörigen Organs entsprechen, wobei jeder Betätiger (Aᵢ) durch einen Schalter (Cᵢ) positionsgesteuert wird, der in der Lage ist, den besagten Betätiger solange mit Strom zu versorgen, bis die gewünschte Position dieses Betätigers erreicht ist, **dadurch gekennzeichnet, daß** jeder Schalter (Cᵢ) mit der Zentralsteuerung (1) durch eine Anzahl (p) von allen Betätigern gemeinsamen ersten Stromversorgungsleitungen (Lⱼ) entsprechend der Anzahl (p) der Abschaltpositionen jedes Betätigers verbunden ist,
wobei die Zentralsteuerung (1) diejenigen der ersten Stromversorgungsleitungen (Lⱼ) ansteuert, die in Abhängigkeit von dem gewünschten gemeinsamen Zustand der besagten Organe (Sᵢ) mit Strom zu versorgen sind, wobei jeder Betätiger (Aᵢ) außerdem mit der Zentralsteuerung (1) erstens durch eine zweite allen Betätigern gemeinsame Stromversorgungsleitung (M), zweitens durch eine jedem Betätiger (Aᵢ) eigene Informationsrückmeldeleitung (Iᵢ), um die Zentralsteuerung (1) über die vorhandene oder nichtvorhandene Stromversorgung des besagten Betätigers (Aᵢ) zu informieren, und drittens durch eine jedem Betätiger (Aᵢ) eigene
Bremsbetätigungsleitung (Fᵢ) verbunden ist, um den besagten Betätiger (Aᵢ) abzubremsen, sobald die Zentralsteuerung (1) durch die Informationsrückmeldeleitung (Iᵢ) über die Abschaltung und/oder die nichtvorhandene Stromversorgung des besagten Betätigers (Aᵢ) informiert wird.

2. System nach Anspruch 1, **dadurch gekennzeichnet, daß** jeder Betätiger (Aᵢ) ein Umlaufelektromotor mit gewickeltem Läufer ist und die zugehörige Bremsbetätigungsleitung (Fᵢ) den Läufer des besagten Motors kurzschließen kann.

3. System nach Anspruch 2, **dadurch gekennzeichnet, daß** die zweite Stromversorgungsleitung an die Masse (M) gelegt ist und jede Bremsbetätigungsleitung (Fᵢ) einerseits mit einer Klemme des zugehörigen Motors (Aᵢ), dessen andere Klemme an die Masse (M) gelegt ist, und andererseits mit einem Ausgang (R) der Zentralsteuerung (1) verbunden ist, der so angeordnet ist, daß er an die Masse gelegt wird, wenn die Bremsbetätigung (12) aktiv ist, und auf hohe Impedanz gesetzt wird, wenn die Bremsbetätigung inaktiv ist.

4. System nach Anspruch 3, **dadurch gekennzeichnet, daß** der vorgenannte Ausgang (R) der Zentralsteuerung (1) mit einer Vorrichtung zur Stromselbstbegrenzung (13, 14) ausgerüstet ist, deren Grenzstromwert größer als die Stromaufnahme des blockierten Motors ist.

5. System nach einem der vorangehenden Ansprüche, **dadurch gekennzeichnet, daß** jede Informationsrückmeldeleitung (Iᵢ) mit einem Spannungsdetektor (8, 9) verbunden ist, der zwischen dem Betätiger (Aᵢ) und dem Schalter (Cᵢ) parallelgeschaltet ist, um an die Zentralsteuerung (1) ein einfaches Binärdatum über die vorhandene oder nichtvorhandene Stromversorgung des besagten Betätigers zu senden.

6. System nach einem der vorangehenden Ansprüche, **dadurch gekennzeichnet, daß** die Zentralsteuerung (1) so gestaltet ist, daß sie die gemeinsame Stromversorgung der Schalter (Cᵢ) abschaltet, sobald die Zentralsteuerung durch die verschiedenen Informationsrückmeldeleitungen (Iᵢ) informiert wird, daß kein Betätiger mehr mit Strom versorgt ist.

7. System nach Anspruch 6, **dadurch gekennzeichnet, daß** die Zentralsteuerung (1) eine Zeitverzögerung umfaßt, um die gemeinsame Stromversorgung der Schalter (Cᵢ) nach Ablauf einer Verzögerungssollzeit abzuschalten, auch wenn die Zentralsteuerung durch die Informationsrückmeldeleitungen informiert wird, daß noch wenigstens ein Betätiger mit Strom versorgt ist.

8. System nach einem der vorangehenden Ansprüche, **dadurch gekennzeichnet, daß** jeder Schalter (Cᵢ) einerseits aus einer Mehrzahl von Strombahnen (Pⱼ) besteht, die jeweils mit einer ersten zugehörigen Stromversorgungsleitung (Lⱼ) verbunden sind, wobei die besagten Strombahnen konzentrisch im Verhältnis zu einer Mittelachse (5) angeordnet sind und sich auf verschiedenen Winkelsektoren erstrecken, und andererseits aus einem Drehschleifkontakt (6), der sich von der besagten Mittelachse (5) aus radial erstreckt, um mit den besagten Strombahnen in Reibkontakt zu kommen, wobei der zugehörige Betätiger (Aᵢ), der über den Schleifkontakt (6) mit Strom versorgt wird, so gestaltet ist, daß er gleichzeitig das zugehörige Organ (Sᵢ) betätigen und den Schleifkontakt (6) drehend um die besagte Mittelachse (5) antreiben kann, bis dieser den Winkelsektor der Strombahn (Pⱼ) verläßt, die effektiv mit Strom versorgt ist, wobei die Endstellung des Schleifkontakts auf einer gegebenen Strombahn (Pⱼ) so die entsprechende Abschaltposition (Eⱼ) des Betätigers definiert.

9. System nach einem der vorangehenden Ansprüche, **dadurch gekennzeichnet, daß** die Organe aus elektrischen Schlössern (Sᵢ) eines Kraftfahrzeugs bestehen.

## Claims

1. System for slaving rotary actuators (Aᵢ) for a plurality (n) of members (Sᵢ) driven by the same central unit (1), in which a rotary actuator (Aᵢ) is intended to actuate each member (Sᵢ) and includes several stop positions (Eⱼ) corresponding to different possible states of the associated member, each actuator (Aᵢ) being slaved in position by a contactor (Cᵢ) which is configured to supply the said actuator with current until the desired position thereof is reached, **characterized in that** each contactor (Cᵢ) is linked to the central unit (1) by a number (p) of first current-supply lines (Lⱼ), which are common to all the actuators, corresponding to the number (p) of stop positions of each actuator, the central unit (1) controlling those of the first supply lines (Lⱼ) to be supplied with power on the basis of the desired common state of the said members (Sᵢ), each actuator (Aᵢ) moreover being linked to the central unit (1), in the first place, by a second power-supply line (M) common to all the actuators, in the second place, by an information-return line (Iᵢ), specific to each actuator (Aᵢ), in order to inform the central unit (1) of the supplying of power or otherwise to the said actuator (Aᵢ), and, in the third place, by a braking-control line (Fᵢ), specific to each actuator (Aᵢ), for braking the said actuator (Aᵢ), as soon as the central unit (1) is informed via the information-return line (Iᵢ) of the stopping of and/or of the absence of a power supply to the said actuator (Aᵢ).

2. System according to Claim 1, **characterized in that** each actuator (Aᵢ) is a rotary electric motor with a wound rotor and the associated braking-control line (Fᵢ) is able to short-circuit the rotor of the said motor.

3. System according to Claim 2, **characterized in that** the second power-supply line is at earth (M) and each braking-control line (Fᵢ) is linked, on the one hand, to one terminal of the associated motor (Aᵢ) the other terminal of which is at earth (M) and, on the other hand, to an output (R) of the central unit (1), which is configured to be at earth when the braking control (12) is active and at high impedance when the braking control is inactive.

4. System according to Claim 3, **characterized in that** the abovementioned output (R) of the central unit (1) is equipped with a current self-limiting device (13, 14), in which the value of the limit current is higher than the current consumed by the motor when blocked.

5. System according to one of the preceding claims, **characterized in that** each information-return line (Iᵢ) is linked to a current detector (8, 9), mounted in series between the actuator (Aᵢ) and the contactor (Cᵢ), in order to send, to the central unit (1), a single binary data item on the supplying or non-supplying of power to the said actuator.

6. System according to one of the preceding claims, **characterized in that** the central unit (1) is configured to cut off the common supply to the contactors (Cᵢ) as soon as the central unit is informed, via the various information-return lines (Iᵢ), that no actuator is still being supplied with power.

7. System according to Claim 6, **characterized in that** the central unit (1) includes a time delay for cutting off the common power supply to the contactors (Cᵢ) upon the expiry of a set-point period of the time delay, even if the central unit is informed via the information-return lines that at least one actuator is still being supplied with power.

8. System according to one of the preceding claims, **characterized in that** each contactor (Cᵢ) consists, on the one hand, of a plurality of tracks (Pⱼ) each linked to a first respective power-supply line (Lⱼ), the said tracks being configured concentrically with respect to a central axis (5) and extending over different angular sectors, and, on the other hand, of a rotary wiper (6) extending radially from the said central axis (5) so as to come into wiping contact with the said tracks, the associated actuator (Aᵢ), which is supplied with current by way of the wiper (6), being configured so as simultaneously to actuate the associated member (Sᵢ) and to drive the wiper (6) in rotation about the said central axis (5) until the wiper leaves the angular sector of the track (Pⱼ) which is actually being supplied with power, the end of travel of the wiper on a given track (Pⱼ) thus defining the corresponding stop position (Eⱼ) of the actuator.

9. System according to one of the preceding claims, **characterized in that** the members consist of motor-vehicle electric locks (Sᵢ).
